# FASCICULE DE BREVET EUROPEEN

(11) **EP 2 804 745 B1**
(45) Date de publication et mention de la délivrance du brevet: **25.10.2017**
(21) Numéro de dépôt: 13701843.8
(22) Date de dépôt: 08.01.2013
(51) Int. Cl.: B29C 70/30, B29C 70/54, B29L 31/30

(54) **PROCÉDÉ POUR LA FABRICATION D'UNE PIÈCE COMPOSITE PAR DRAPAGE**
VERFAHREN ZUR HERSTELLUNG EINES VERBUNDTEILS DURCH LAMINIEREN
METHOD FOR MANUFACTURING A COMPOSITE PART BY LAYUP

(30) Priorité: 17.01.2012 FR 1250430
(43) Date de publication de la demande: 26.11.2014
(73) Titulaire: Safran Nacelles, 76700 Gonfreville-l'Orcher (FR)
(72) Inventeur: VAUCHEL, Guy Bernard, F-76700 Harfleur (FR); PILLON, Eric, F-76110 Benarville (FR); MAZZONI, Jean-Luc, F-76110 Benarville (FR)
(74) Mandataire: Gaillarde, Frédéric F. Ch.
(86) Numéro de dépôt international: PCT/FR2013/050037
(87) Numéro de publication internationale: WO 2013/107963

(56) Documents cités:
- WO-A1-01/26871
- US-A- 5 547 629
- US-A1- 2009 294 040

## Description

L'invention se rapporte à un procédé de fabrication d'une pièce en matériau composite ainsi qu'à un dispositif pour la mise en oeuvre dudit procédé.

La fabrication d'une pièce en matériau composite s'effectue généralement par un procédé de moulage et imprégnation de fibres avec de la résine qui est ensuite polymérisée.

De manière générale, un tel procédé de fabrication comprend une étape de mise en place de plis de fibres sur la surface d'un moule, étape appelée opération de drapage, suivi d'une étape de polymérisation d'une résine enveloppant les fibres.

On peut citer plusieurs variantes de mise en oeuvre.

Tout d'abord, la résine peut être déjà présente lors de la mise en place des plis, on parlera alors de plis pré imprégnés.

Après drapage des plis préimprégnés, la polymérisation de l'ensemble s'effectue en autoclave.

Ce type de procédé est communément appelé drapage manuel.

D'autres variantes utilisent des plis secs et comprennent une étape d'ajout de résine.

Dans le procédé de moulage par transfert de résine ou RTM, pour "Resin Transfert Molding", l'ajout de résine s'effectue par injection sous pression à l'intérieur d'un ensemble moule / contre-moule renfermant les plis.

Le moule est généralement appelée moule femelle ou matrice, et le contre-moule constitue une partie mâle également appelée poinçon.

On peut, également, citer le procédé de moulage par infusion de résine dans lequel le moule est refermé par l'intermédiaire d'un couvercle souple permettant le passage contrôlé d'une résine qui va infuser à l'intérieur des éléments de renfort fibreux puis polymériser, afin de donner une pièce rigide.

La propagation de la résine se fait par une force motrice créée par une dépression en certains points du couvercle, vers lesquels la résine introduite dans le moule se déplace.

Dans le procédé d'infusion traditionnel, l'outillage de moulage est ainsi formé d'un moule matrice et d'un couvercle étanche tel qu'une bâche comme partie contre moule.

Ces procédés de fabrication de pièces composites, qu'ils soient en drapage manuel, RTM ou infusion de résine, sont des technologies dans lesquelles l'outillage de moulage est lourd et conçu pour une forme de pièce spécifique destinée à être réalisée. Ceci engendre des coûts élevés d'outillage pour pouvoir produire des pièces très variées.

Pour des raisons à la fois techniques tenant à l'intégrité et aux propriétés mécaniques de la pièce réalisée en matériau composite et économique visant à limiter les opérations de moulage et démoulage, il est souhaitable de pouvoir réaliser des pièces entières en une seule opération de moulage / démoulage.

La réalisation de pièces inférieures à 180° de circonférence est relativement facile. Il n'en va cependant pas de même pour des pièces présentant des géométries s'étendant sur une zone angulaire importante supérieure à 180° et possédant des lignes non démoulables, c'est-à-dire ne permettant pas l'extraction du moule après réalisation de la pièce.

Dans de tel cas il est alors nécessaire de réaliser un moule en plusieurs parties démontables permettant l'extraction de chaque partie après moulage.

Cela rend l'opération de fabrication plus complexe, nécessite un temps supplémentaire d'assemblage et de démontage du moule et entraîne un surcoût important de fabrication du moule.

Un exemple de pièce particulièrement difficile à réaliser en matériau composite par ce type de procédé est une structure externe de nacelle de turboréacteur telle qu'un capot mobile d'inverseur de poussée pour une structure de nacelle de type dit O-Duct.

Plus précisément, un avion est mu par plusieurs turboréacteurs logés chacun dans une nacelle servant à canaliser les flux d'air engendrés par le turboréacteur, et qui peut également abriter un ensemble de dispositifs assurant diverses fonctions tels qu'un dispositif d'inversion de poussée dont le rôle est d'améliorer la capacité de freinage de l'avion en redirigeant vers l'avant au moins une partie de l'air du flux secondaire.

Une nacelle présente généralement une structure tubulaire comprenant une entrée d'air en amont du turboréacteur, une section médiane destinée à entourer une soufflante du turboréacteur, une section aval abritant les moyens d'inversion de poussée et destinée à entourer la chambre de combustion du turboréacteur, et est généralement terminée par une tuyère d'éjection dont la sortie est située en aval du turboréacteur.

Le dispositif d'inversion de poussée comprend des moyens d'inversion qui, dans une phase d'inversion, permettent au moins en partie l'obstruction de la veine du flux froid et la redirection d'au moins une partie de ce dernier vers l'avant de la nacelle, engendrant de ce fait une contre-poussée qui vient s'ajouter au freinage des roues de l'avion.

Les moyens mis en oeuvre pour réaliser cette réorientation du flux froid varient suivant le type d'inverseur. Cependant, dans tous les cas, la structure d'un inverseur comprend un ou plusieurs capots mobiles déplaçables entre une position ouverte ou « jet inverse » dans laquelle ils ouvrent dans la nacelle un passage destiné au flux dévié et une position fermée ou « jet direct » dans laquelle ils ferment ce passage.

Dans le cas d'un inverseur de poussée à grilles, la réorientation du flux d'air est effectuée par des grilles de déviation et les capots mobiles n'ont qu'une simple fonction de coulissage visant à découvrir ou recouvrir ces grilles.

Selon un mode de réalisation, il est connu une nacelle destinée à être supportée par un pylône du turboréacteur comprenant un dispositif d'inversion de poussée possédant un capot mobile unique monobloc sensiblement périphérique et quasi annulaire, monté coulissant sur des rails disposés de part et d'autre dudit pylône.

Un tel capot est souvent désigné par les termes anglo-saxons « O-duct », par allusion à la forme de virole d'un tel capot, par opposition au « D-duct », qui comprend en fait deux demi-capots s'étendant chacun sur une demi-circonférence de la nacelle.

On comprend donc que la réalisation en matériau composite d'un tel capot de type « O-Duct » par moulage unique est une opération délicate et difficile.

Une solution actuellement utilisée est de réaliser la virole constituant le panneau en partant de la surface aérodynamique interne (externe veine) et de remonter vers l'externe de la nacelle avant de rapporter mécaniquement tout ou partie de la structure aérodynamique externe du composant de la nacelle.

En général la ligne aérodynamique interne de la structure d'inverseur n'est pas démoulable, c'est-à-dire qu'elle présente une forme convexe interdisant de démouler la pièce réalisée par simple extraction dans un sens ou dans l'autre de l'outillage de moulage. La solution pour la réalisation en composite d'une telle structure est l'adoption d'un outillage mâle en plusieurs parties lourdes, complexes et peu fiables.

Plus précisément, un outillage dit à clés est généralement utilisé.

Un tel outillage se présente généralement en trois, quatre ou cinq parties dont la fixation entre les éléments se fait en interne de la structure soit mécaniquement par boulonnage soit par un système complexe de liaison automatique et de manipulation de clés.

Pour la fabrication de la virole du capot mobile d'un inverseur de poussée de type O-Duct, on pourra procéder de la manière suivante.

Tout d'abord, les clés sont assemblées et étanchées entre elles. Une peau interne est ensuite drapée, polymérisée, démontée et percée si nécessaire en cas d'application acoustique sur la virole en cours.

Des âmes formant la structure interne pour donner de l'inertie à la virole peuvent être constituées par exemple par des structures en nid d'abeille ou en mousse. Ces éléments d'âmes sont positionnés et ancrés sur la première peau (peau interne).

Une peau destinée à constituer la peau externe est surdrapée sur les éléments d'âme et l'ensemble est polymérisé afin de constituer le premier élément du capot mobile.

Indépendamment, une virole externe reposant sur les lignes externes aérodynamiques est réalisée et assemblée mécaniquement sur l'élément interne de la virole mobile.

Les inconvénients d'une structure d'outillage à clés sont notamment :
- la difficulté voire l'impossibilité d'obtenir une bonne étanchéité entre les clés entraînant une augmentation du temps de cycle de réalisation de la pièce ou une pièce à rebuter ou à usiner,
- les risques de dégradation de la surface aérodynamique liée aux jonctions des clés,
- la présence d'élément encombrants, coûteux et lourds à manipuler entraînant un risque d'endommagement des éléments du moule lors des manipulations, un temps important à consacrer à la manipulation des clés, ainsi que la nécessité d'un poste de travail adapté permettant l'accès aux clés par des opérateurs,
- la nécessité de reconditionner les clés après chaque polymérisation avec risque d'endommagement de ces dernières à chaque manipulation isolée.

Par ailleurs, cela entraîne plusieurs inconvénients sur la pièce assemblée dus à l'outillage à clés. Il s'agit notamment de la nécessité d'avoir un panneau externe rapporté, mais aussi de la difficulté d'installer ensuite un cadre intermédiaire de renforcement dudit panneau externe, en raison de lignes aérodynamiques de plus en plus resserrées qui réduisent l'accès et rendent le réglage de fixations difficile.

On peut également citer la présence de fixations sur la partie externe voire sur la partie interne à cause de l'apport mécanique de la structure externe, ainsi que la présence possible d'une dégradation aérodynamique sur la qualité de la ligne externe dû au mauvais positionnement possible du panneau externe sur la virole interne à l'interface de la jonction.

Le document US 5 547 629 divulgue un procédé de fabrication d'une pièce en matériau composite par opération de drapage, ladite pièce présentant au moins une surface intérieure convexe. Dans le procédé du document US 5 547 629 les moules intermédiaires couvrent toutefois entièrement la surface interne de la partie externe. Ainsi, il existe un besoin important pour une solution d'outillage et de mise en oeuvre permettant la réalisation d'une telle structure de type O-Duct, et plus généralement de toute pièce composite s'étendant sur plus de 180 degrés et/ ou présentant une structure interne convexe rendant impossible son démoulage.

Pour ce faire, la présente invention se rapporte à un procédé de fabrication d'une pièce en matériau composite par au moins une opération de drapage et de polymérisation, ladite pièce présentant au moins une surface intérieure convexe, comprenant les étapes suivantes visant à :
- disposer sur une surface intérieure d'un moule externe de fabrication définissant au moins en partie les lignes d'une surface extérieure de la pièce à réaliser, des éléments nécessaires à la réalisation d'une partie externe de la pièce à réaliser,
- procéder à la réalisation de ladite partie externe de la pièce à réaliser par procédé d'injection de résine et polymérisation au moins partielle de cette résine.
- installer au niveau d'au moins une partie d'une surface interne de la partie externe précédemment réalisée, un moule intermédiaire dont une surface interne vise, d'une part, à assurer une interface avec une partie restante de la surface interne de la partie externe précédemment réalisée, et d'autre part, à définir au moins en partie, les lignes de moulage d'une partie intermédiaire de la pièce à réaliser.

- disposer les éléments de la partie intermédiaire et procéder à sa réalisation par opération de drapage et polymérisation au moins partielle de cette résine.
- disposer sur la partie intermédiaire réalisée, les éléments d'une partie interne restante à réaliser et procéder à sa réalisation par opération de drapage et polymérisation au moins partielle de cette résine.

Ainsi, en prévoyant un moule principal externe et en commençant la réalisation de la pièce depuis une partie externe vers une partie interne, soit à l'inverse de la technique antérieure, il est possible d'éviter l'utilisation de moules dans des zones internes à géométrie non démoulable.

Le moule externe pourra ainsi être réalisé en un seul tenant et sans pièce mécanique ni clés. La mise en place de l'outillage est également plus rapide.

De manière complémentaire, le procédé comprend une étape supplémentaire intermédiaire de réusinage de la partie externe réalisée. Ce réusinage vise à assurer une bonne interface avec les parties à venir.

Préférentiellement, au moins une partie des éléments de la partie interne sont pré-polymérisés avant installation des éléments restant et polymérisation finale.

La présente description se rapporte également à un outillage pour la mise en oeuvre du procédé de fabrication d'une pièce en matériau composite présentant au moins une surface intérieure convexe comprenant :
- au moins un moule externe de fabrication dont une surface interne définit sensiblement les lignes externes de la pièce à fabriquer, et
- au moins un moule intermédiaire apte à être disposé en regard de la surface interne du moule externe et conçu de manière telle qu'une surface interne dudit moule intermédiaire définissent au moins en partie les lignes de moulage d'une partie intermédiaire de la pièce à réaliser.

De manière avantageuse, le moule intermédiaire est équipé de moyens de positionnement par rapport au moule externe.

Avantageusement, le moule externe comprend des moyens de positionnement complémentaire correspondants.

De manière préférentielle, le moule intermédiaire est équipé d'une vessie de contre forme destinée à être orientée vers la surface interne du moule externe et complémentaire à au moins une partie de la surface de moulage du moule externe.

Avantageusement, le moule intermédiaire est équipé d'au moins une partie réalisée en matériau souple de type matériau élastomère, notamment au niveau de cornières de raccordement.

De manière avantageuse, l'outillage comprend des moyens d'étanchéification entre le moule externe et le moule intermédiaire.

Préférentiellement, le moule externe s'étend sur au moins 180° de circonférence.

La présente invention sera mieux comprise à la lumière de la description détaillée qui suit en regard du dessin annexé dans lequel :
- la figure 1 est une représentation schématique en coupe longitudinal d'un capot externe d'inverseur de poussée pour nacelle de turboréacteur réalisé en matériau composite selon l'art antérieur,
- la figure 2 est une représentation des éléments constituant un capot mobile similaire au capot de la figure 1 en vue de sa réalisation par le procédé objet de l'invention.
- Les figures 3 et 4 sont des vue en perspective d'un outillage pour la mise en oeuvre du procédé selon l'invention en vue de la fabrication du capot des figures 1 et 2.
- Les figures 5 à 13 sont des vues schématiques en coupe longitudinales des différentes étapes de réalisation du capot de la figure 1 selon le procédé de l'invention.

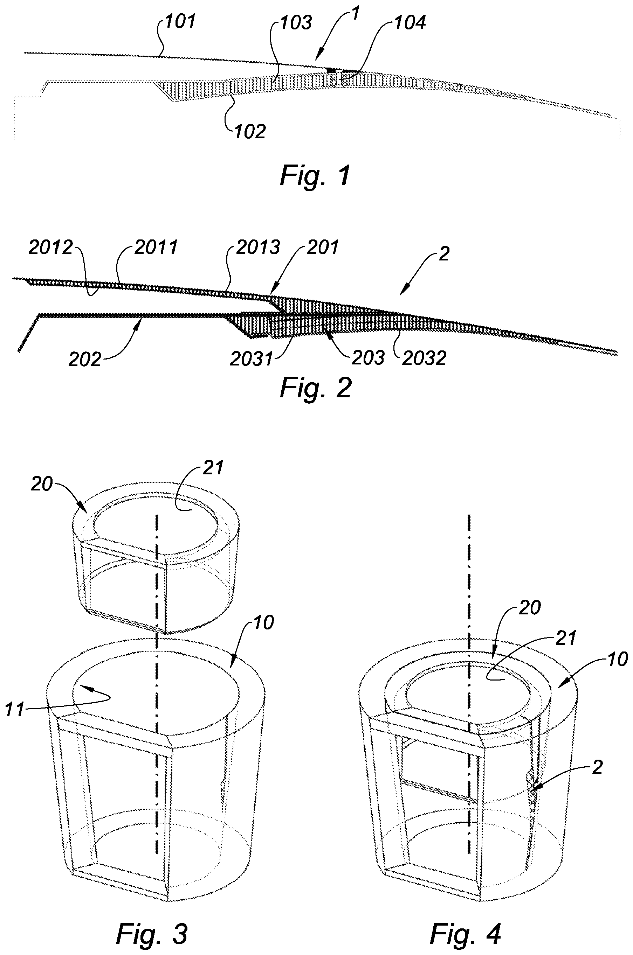

Les figures 1 et 2 montrent un capot mobile 1 d'inversion de poussée de type O-Duct vu en coupe longitudinale que l'on souhaite réaliser en matériau composite à l'aide du procédé selon l'invention. Comme mentionné précédemment, un capot mobile de ce type s'étend sur quasiment toute la périphérie de la nacelle à l'exception d'une zone supérieure destinée au passage d'un pylône de rattachement du turboréacteur. Plus généralement, ce capot mobile s'étend sur plus de 180° de section angulaire, ce qui rend sa fabrication en une pièce et son démoulage particulièrement complexe comme expliqué en introduction de cette demande.

Plus précisément, le capot mobile 1 présente une surface interne aérodynamique destinée à définir une surface externe d'une veine de circulation d'air. Cette surface interne est une surface convexe non démoulable, c'est-à-dire interdisant de démouler la pièce ainsi réalisée par simple extraction de l'outillage dans un sens ou dans l'autre.

Il convient bien évidemment de noter que le procédé objet de l'invention n'est pas limité à la mise en oeuvre d'un tel capot mobile et concerne plus générale toute structure en matériau composite présentant une surface convexe non démoulable.

De manière générale, comme visible sur la figure 1, un capot 1 réalisé en matériau composite comprend :
- Une virole externe 101 définissant des lignes aérodynamiques externes de la nacelle,
- Une virole interne 102 définissant des lignes aérodynamiques interne de la veine de circulation de flux froid, et éventuellement équipée d'une structure d'atténuation acoustique possédant une peau acoustique perçée,
- Des âmes 103 formant la structure interne du capot 1. Ces âmes peuvent être classiquement des panneaux en nid d'abeille ou des panneaux de mousse.

Comme mentionnée précédemment, le procédé de réalisation selon l'art antérieur repose sur la fabrication initiale de la virole interne 102 et installation des âmes. La virole externe 101 est fabriquée indépendamment puis rapportée et fixée mécaniquement (fixation 104) sur la virole interne 102 fabriquée initialement. La fabrication du capot mobile 1 s'effectue donc sensiblement de l'intérieur vers l'extérieur à l'aide d'un moule mâle interne. Les inconvénients d'un tel mode de réalisation ont été mentionnés précédemment.

Le procédé selon l'invention propose de réaliser un capot mobile 2 à partir de la virole externe vers l'interne dudit capot 2 en utilisant un moule principale femelle externe et pouvant être réalisé d'un seul tenant.

La définition des lignes aérodynamiques externe de la nacelle à ce niveau par ledit moule principal externe, se situe en aval du maître couple de la nacelle et donc dans une géométrie démoulable vers l'amont de la structure réalisée.

Pour ce faire, le capot 2 est subdivisé en plusieurs portions montrées sur la figure 2.

Tout d'abord, le capot 2 présente une partie externe 201 correspondant sensiblement à la virole externe 101, et comprenant une peau externe 2011, une peau interne 2012, et une structure d'âme 2013 située entre la peau externe 2011 et la peau interne 2012.

Le capot 2 présente ensuite une partie intermédiaire 202 correspondant sensiblement à une paroi externe de la virole interne 102 et destinée à assurer l'interface entre une partie interne du capot 2 et la partie externe 3 précédente.

Le capot 2 présente enfin une partie interne 203 comprenant une peau interne 2031 et une structure d'âme 2032.

Le capot 2 présente donc un panneau à âme au niveau de la jonction de la virole externe et de la virole interne.

Ce capot 2 est réalisé selon le procédé objet de la présente invention.

Pour ce faire, le procédé utilise un outillage représenté sur les figures 3 et 4 et comprenant :
- au moins un moule externe 10 de fabrication dont une surface interne 11 définit sensiblement les lignes externes du capot 2 (partie externe 201), et
- au moins un moule intermédiaire 20 apte à être disposé à l'intérieur du moule externe 10 en regard de la surface interne 11 du moule externe et conçu de manière telle qu'une surface interne 21 dudit moule intermédiaire 20 définissent au moins en partie les lignes de moulage de la partie intermédiaire 202 du capot 2.

Le moule externe 10 sera avantageusement réalisé en un seul tenant (monobloc), sur un secteur angulaire correspondant à celui de la pièce à réaliser. Bien évidemment, si l'outillage n'a pas besoin de couvrir une pièce sur un secteur supérieur à environ 330° de circonférence, pourra comporter une ouverture d'accès ou de visu de l'interne de l'outillage.

En l'espèce, on notera que le capot 2 présente une structure ouverte pour le passage d'un mât de rattachement, cette ouverture pouvant être reportée au niveau de moule externe 10 et du moule interne 20, et tenir lieu d'ouverture d'accès et/ou de contrôle visuel.

Avantageusement, pour des questions de manutention et d'aménagement de poste l'ensemble des outillages est défini vertical et la partie la plus évasée est préférentiellement positionnée vers le haut.

Selon des caractéristiques complémentaires avantageuses, avantageusement l'outillage intermédiaire est étanche sur l'outillage externe :
- l'outillage intermédiaire est centré par rapport à l'outillage externe,
- l'outillage intermédiaire est assujetti à l'outillage externe.
- l'outillage intermédiaire s'auto-centre sur au moins une partie de l'interne de la virole externe

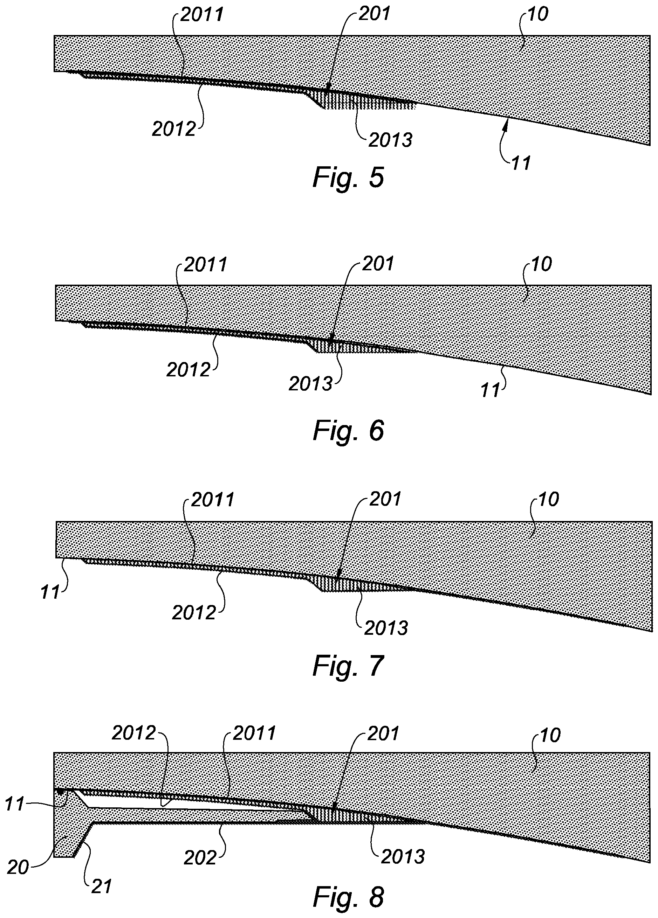

Le procédé de fabrication selon l'invention va maintenant être décrit en détail au vu des figures 5 à 13.

Une première étape consiste à réaliser la virole externe, et plus précisément la partie externe 201 (Figures 5 à 7).

La partie externe 201, représentant tout ou une partie de la surface externe du capot 2, est réalisé en une seule opération.

Pour ce faire, on dispose sur la surface intérieure 11 du moule externe 10, les éléments nécessaire à la réalisation de ladite partie externe 201 et comprenant :
- une peau externe 2011,
- un structure d'âme 2013 et/ou des renforts internes,
- une peau interne 2012.

Selon une première variante de réalisation représentée à la figure 5, la peau externe 2011 est interrompue en partie aval à un niveau correspondant à une interface horizontale avec une face de diaphragme correspondant à la partie intermédiaire qui sera réalisée ultérieurement (étape 3).

La structure d'âme 2013 est installée avec une sur-épaisseur ver l'intérieure de la structure, le drapage des plis internes de la peau interne 2012 se faisant également en débordement.

L'ensemble est polymérisé au moins partiellement, et la face interne de l'âme 2013 et la peau interne 2012 sont retouchées par usinage (Figure 6 après usinage) pour assurer une bonne interface avec les parties à venir.

Selon une autre variante (non représentée), il est possible de mettre en place des âmes à cotes finies et de compenser les écarts potentiels à l'étape suivante.

Selon encore une autre variante (Figure 7), il est possible d'étendre le drapage de la peau externe 2012, en épaisseur définitive ou en épaisseur intermédiaire jusqu'à l'extrémité aval de la structure de la partie externe, et donc quasiment sur toute la surface interne 11 du moule externe 10. La mise en oeuvre du reste de la structure est identique à la procédure de la première variante de la peau externe partielle.

Une deuxième étape du procédé vise à la réalisation de la partie intermédiaire 202 (Figures 8 à 10).

Pour ce faire, on installe au niveau d'une partie de la virole interne 2012 de la partie externe 201 précédemment réalisée, un moule intermédiaire dont la surface interne 21 assure l'interface avec un partie de la surface interne de la partie externe 201 précédemment réalisée et définit en partie les lignes de moulage de la partie intermédiaire 202 à réaliser.

Plus précisément, l'outillage intermédiaire 20 est configuré pour assurer l'interface aval avec la forme de l'âme 2013 aval de la partie externe 201 et la peau interne 2012.

De manière préférentielle, l'outillage intermédiaire 20 est centré sur l'outillage externe 10. La partie amont de l'outillage intermédiaire 20 pourra notamment être centrée sur l'outillage externe 10 soit par l'interne, soit par recouvrement de l'outillage intermédiaire sur l'outillage externe et un système d'indexation, de localisation, de centrage et de maintien, coopérant notamment avec des moyens d'indexation complémentaires du moule externe 10.

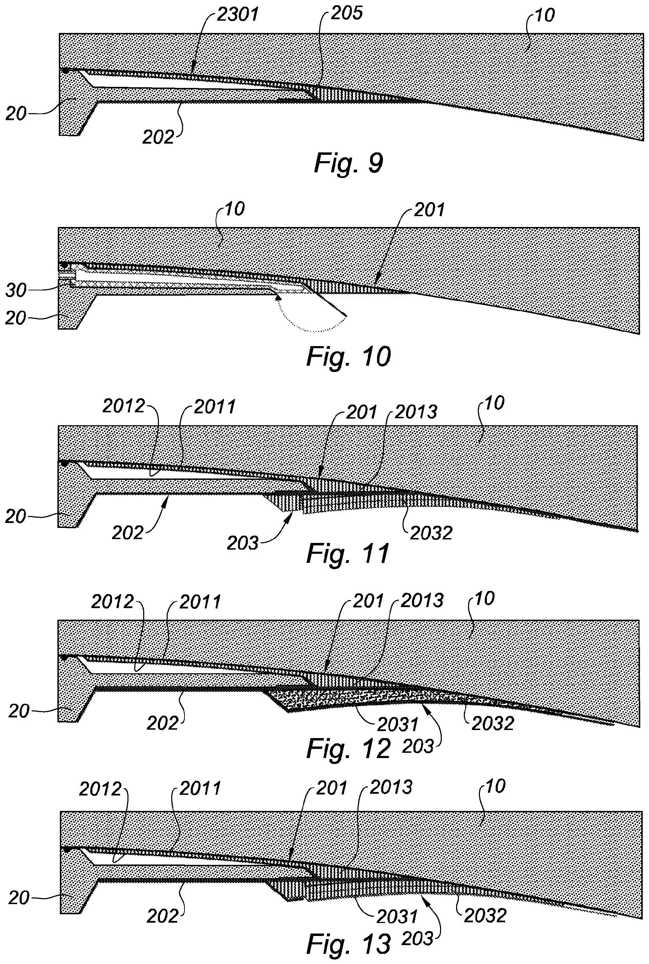

Selon une variante de réalisation (figure 9), l'extrémité aval de l'outillage intermédiaire 20 peut être réalisé en totalité ou partiellement en composant élastomère pouvant permettre d'intégrer les écarts de forme en assurant une pression de contact pour une variante de renforcement de la partie externe 201 avec la partie interne 203 à venir par des plis de composite faisant office de cornière 205 de raccordement. Cette cornière 205 peut de même être rapportée en configuration finie.

Cette cornière de renforcement 205 fait la liaison au moins du retour interne de la peau interne 2012 de la partie externe 201 avec la surface externe de plis de la partie intermédiaire 202.

La partie intermédiaire 202 à réalisée est dans le cas d'espèce un diaphragme de séparation entre la partie externe 201 comprenant un ensemble de plis formant une paroi.

Une fois les plis constitutifs de cette partie intermédiaire 202 installés, on procède à sa réalisation par opération de drapage et polymérisation au moins partielle de la résine.

Une étanchéité peut être associée entre les deux outillages 10, 20 afin d'isoler la partie déjà polymérisée (partie externe 201) du reste de la structure.

Une fois l'ensemble en place avec le renfort de plis, le drapage de la partie intermédiaire 202 peut être réalisé.

Il s'agit de draper en frais tout l'interne 21 de l'outillage 20 de l'amont à l'aval de la structure. Des plis de colle sont rapportés aux zones le nécessitant.

Dans la première variante où la peau externe 2011 de la partie externe 201 est partielle, la partie intermédiaire sert aussi de peau externe dans la zone aval de la structure. Le nombre, l'orientation et la disposition des plis sont laissés à l'initiative de l'homme de métier.

Dans la deuxième variante où la peau externe 2011 s'étend jusqu'à l'extrémité aval de la partie externe 201, on peut distinguer deux cas de figure :
- le drapage de la peau intermédiaire s'arrête à l'extrémité aval de l'âme 2013,
- le drapage de la peau intermédiaire s'étend partiellement ou entièrement jusqu'à l'extrémité aval de la virole

Selon une variante représentée sur la figure 10, le drapage de la peau interne 2012 du panneau externe 201 peut être réalisé en débordement de l'âme 2013 afin d'être utilisé comme renfort de retour sur la peau intermédiaire 202.

En outre, afin de supprimer un cycle de polymérisation intermédiaire à l'étape 2 précédente, il est possible d'aménager l'outillage intermédiaire 20 avec une vessie 30 de contre forme genre élastomère (visible Figure 10).

Cette vessie vient appliquer une pression sur la peau interne 2012 de la partie externe 201 en même temps qu'une poche à vide externe vient plaquer la peau intermédiaire 202 lors de la phase de polymérisation commune.

En variante, l'outillage intermédiaire 20 peut reprendre directement les formes internes de la peau externe 2011 si celle-ci ne subit pas de phase de polymérisation intermédiaire. Sinon la forme externe de l'outillage intermédiaire ne présente pas de contact avec la forme interne de la peau externe puisque celle-ci est déjà rigidifiée suite à son étape de polymérisation intermédiaire.

On notera également que l'outillage intermédiaire 20 peut être de structure rigide sur toute sa longueur ou n'être rigide que sur une longueur partielle et finalisée en longueur par la vessie en silicone renforcée ou en association avec une contre plaque positionnée après le drapage de l'étape 4 sous la poche à vide externe.

La quatrième étape consiste à mettre en place la partie interne 203 et ses âmes 2032 (Figures 11 et 12).

La partie externe 201 étant polymérisée, une phase de mise en place des âmes 2032 constituant la partie interne 203 du capot 2 est effectuée.

Avantageusement les âmes 2032 sont préparées pour être interfacés avec la peau intermédiaire 202.

L'ensemble des âmes est ancré sur la structure et une phase de polymérisation de cette étape peut être réalisée.

Cette phase de polymérisation pourra être nécessaire si une retouche et un surfaçage interne des âmes 2032 est requis. Sinon il est possible de passer directement à l'étape suivante consistant à réaliser la peau interne 2031 de la partie interne 203 (Figure 11).

La peau interne 2031, aérodynamique, si elle n'est pas acoustique, peut être réalisée, si le support de pose le permet comme de la mousse, en drapage frais.

Dans le cas d'une structure acoustique, il est nécessaire de réaliser au moins la peau acoustique en pré cuit afin d'assurer la qualité de ligne aérodynamique voulue pour une interface sur du nid d'abeille et éviter le "télégraphing" rédhibitoire pour des performances aérodynamiques optimales.

La peau peut être percée avant collage sur le nid d'abeille.

Avantageusement une partie non acoustique peut être drapée en frais intégrant un recouvrement en zone amont de la peau acoustique comme le présente la figure ci après. Le drapage en frais peut remonter au plus amont de la structure intermédiaire 202.

Une fois la partie interne assemblée, il est procédé à sa polymérisation.

Le capot 2 fini est montré sur la figure 13.

Bien que l'invention ait été décrite avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention tel que défini par les revendications.

## Revendications

1. Procédé de fabrication d'une pièce (1) en matériau composite par opération de drapage, ladite pièce présentant au moins une surface intérieure convexe, comprenant les étapes suivantes visant à :
- disposer sur une surface intérieure (11) d'un moule externe (10) de fabrication définissant au moins en partie les lignes d'une surface extérieure de la pièce à réaliser, des éléments (2011, 2012, 2013) nécessaires à la réalisation d'une partie externe (201) de la pièce à réaliser,
- procéder à la réalisation de ladite partie externe de la pièce à réaliser par procédé de dépose de plis et polymérisation au moins partielle de la résine.
- installer au niveau d'au moins une partie d'une surface interne de la partie externe précédemment réalisée, un moule intermédiaire (20) dont une surface interne (21) vise, d'une part, à assurer une interface avec une partie restante de la surface interne de la partie externe précédemment réalisée, et d'autre part, à définir au moins en partie, les lignes de moulage d'une partie intermédiaire (202) de la pièce à réaliser.
- disposer les éléments de la partie intermédiaire et procéder à sa réalisation par opération de drapage et polymérisation au moins partielle de la résine.
- disposer sur la partie intermédiaire (202) réalisée, les éléments (2031, 2032) d'une partie interne (203) restante à réaliser et procéder à sa réalisation par opération de drapage et polymérisation au moins partielle de la résine.

2. Procédé selon la revendication 1, **caractérisé en ce qu'**il comprend une étape supplémentaire intermédiaire de réusinage de la partie externe (201) réalisée.

3. Procédé selon l'une quelconque des revendications 1 et 2, caractérisé en ce au moins une partie des éléments de la partie interne (203) sont pré-polymérisés avant installation des éléments restant et polymérisation finale.

## Patentansprüche

1. Verfahren zur Herstellung eines Bauteils (1) aus Verbundmaterial durch einen Drapiervorgang, wobei das Bauteil zumindest eine konvexe Innenfläche aufweist, die folgenden Schritte umfassend:
- Anordnen auf einer Innenfläche (11) einer äußeren Form (10), die derart gestaltet ist, um zumindest teilweise die Linien einer Außenfläche des herzustellenden Bauteils zu definieren, der Elemente (2011, 2012, 2013), die für die Realisierung eines äußeren Abschnitts (201) des zu realisierenden Bauteils nötig sind,
- Vornehmen der Realisierung des äußeren Abschnitts des zu realisierenden Bauteils im Verfahren des Beseitigens von Falten und zumindest teilweise Polymerisierens des Harzes,
- Anbringen im Bereich von zumindest einem Abschnitt einer Innenfläche des zuvor realisierten äußeren Abschnitts, einer Zwischenform (20), von der eine Innenfläche (21) einerseits darauf abzielt, für eine Schnittstelle mit einem verbleibenden Abschnitt der Innenfläche des zuvor realisierten äußeren Abschnitts zu sorgen, und andererseits zumindest teilweise die Formlinien eines Zwischenabschnitts (202) des zu realisierenden Bauteils zu definieren,
- - Anordnen der Elemente des Zwischenabschnitts und Vornehmen seiner Realisierung durch einen Drapiervorgang und zumindest teilweise Polymerisieren des Harzes,
- Anordnen auf dem realisierten Zwischenabschnitt (202) der Elemente (2031, 2032) eines zu realisierenden verbleibenden inneren Abschnitts (203) und Vornehmen seiner Realisierung durch einen Drapiervorgang und zumindest teilweise Polymerisieren des Harzes.

2. Verfahren nach Anspruch 1, **dadurch gekennzeichnet, dass** es einen zusätzlichen Zwischenschritt zur Nachbearbeitung des realisierten äußeren Abschnitts (201) umfasst.

3. Verfahren nach einem der Ansprüche 1 und 2, **dadurch gekennzeichnet, dass** zumindest ein Abschnitt der Elemente des inneren Abschnitts (203) vor dem Anbringen der verbleibenden Elemente und der abschließenden Polymerisierung vorpolymerisiert wird.

## Claims

1. A method for manufacturing a part (1) made of composite material through a draping operation, said part having at least one convex internal surface, comprising the following steps aiming at:
- placing over an internal surface (11) of an outer manufacturing mold (10) defining at least partially the lines of an external surface of the part to be produced, elements (2011, 2012, 2013) necessary to the production of an outer portion (201) of the part to be produced,
- proceeding to the production of said outer portion of the part to be produced through a fold laying method and at least partial polymerization of the resin,
- installing at the level of at least one portion of an inner surface of the previously produced outer portion, an intermediate mold (20) whose an inner surface (21) aims, on the one hand, to provide an interface with a remaining portion of the inner surface of the previously produced outer portion and, on the other hand, to define at least partially, the molding lines of an intermediate portion (202) of the part to be produced,
- placing the elements of the intermediate portion and proceeding to its production through a draping operation and at least partial polymerization of the resin,
- placing over the produced intermediate portion (202), the elements (2031, 2032) of a remaining inner portion (203) to be produced and proceeding to its production through a draping operation and at least partial polymerization of the resin.

2. The method according to claim 1, **characterized in that** it comprises an additional intermediate step of re-machining the produced outer portion (201).

3. The method according to any one of claims 1 and 2, **characterized in that** at least one portion of the elements of the inner portion (203) are pre-polymerized before installation of the remaining elements and final polymerization.
